# EUROPEAN PATENT SPECIFICATION

(11) **EP 2 931 024 B1**
(45) Date of publication and mention of the grant of the patent: **20.02.2019**
(21) Application number: 13805494.5
(22) Date of filing: 10.12.2013
(51) Int. Cl.: A01G 23/06

(54) **STUMP PLANING DEVICE, SYSTEM AND METHODS**
STUMPFHOBELVORRICHTUNG, SYSTEM UND VERFAHREN
DISPOSITIF, SYSTÈME ET PROCÉDÉS D'ARASEMENT DE SOUCHE

(30) Priority: 11.12.2012 GB 201222289; 16.04.2013 GB 201306892
(43) Date of publication of application: 21.10.2015
(73) Proprietor: Auger Torque Europe Limited, Hazleton Cheltenham GL54 4DX (GB)
(72) Inventor: RAYNER, Alister Gordon, Cheltenham Gloucestershire GL54 4DX (GB); BEARD, Neil, Cheltenham Gloucestershire GL54 4DX (GB)
(74) Representative: Hocking, Adrian Niall
(86) International application number: PCT/GB2013/053245
(87) International publication number: WO 2014/091219

(56) References cited:
- EP-A1- 2 077 069
- EP-A1- 2 095 707
- DE-A1- 3 623 559
- DE-U1- 9 417 778
- US-A- 1 164 659

## Description

The present invention relates to a stump planing device, a stump planing system using such a device, an earth drill in combination with such a device, a hydraulic machine using such a device, a method of preventing or limiting wood-swarf clogging whilst maintaining centred stump planing again using such a device, and to a method of storing such a stump planing device.

A stump planing device which is connectable to a hydraulic load-bearing arm of a machine, such as front loader, backhoe or skidsteer is known. However, maintaining a centring and thereby preventing or limiting wandering whilst planing the stump is problematic.

It is known to provide a stump planer which utilises a continuous peripheral arcuate guide. However, it is known that such a continuous arcuate guide retains wood swarf, thereby clogging the planer and occluding the cutting edges.

Additionally, a stump planer with such a continuous peripheral arcuate guide cannot be simply dismantled for storage and transportation, due to the arcuate guide interconnecting all cutting arms.

Document EP2077069 discloses a conventional tree stump drill for removing tree stumps.

The present invention seeks to provide a solution to these problems.

According to a first aspect of the invention, there is provided a stump planing device comprising a rotatable support shaft, and at least two cutting arms extending from the support shaft, each said cutting arm including a cutter on a cutting-arm body of the cutting arm and an arcuate centring-guide arm at or adjacent to a distal end of the cutting-arm body, wherein each said cutting arm is detachably fastenable to the support shaft for storage and transportation, characterised in that each arcuate centring-guide arm defines a constant outer radius along its longitudinal extent and is spaced from a neighbouring arcuate centring-guide arm, so as to provide a gap for the passage of cut material.

Preferable and/or optional features of the first aspect of the invention are set forth in claims 2 to 7, inclusive.

According to a second aspect of the invention, there is provided a stump planing system comprising a stump planing device in accordance with the first aspect of the invention, and a planing template which includes a location guide for the centring-tip element.

Preferable and/or optional features of the second aspect of the invention are set forth in claim 9.

According to a third aspect of the invention, there is provided an earth drill device in combination with a stump planing device in accordance with the first aspect of the invention, the earth drill device being suspendable from a hydraulically operable arm to provide a vertical or substantially vertical drivable shaft to which the rotatable support shaft of the stump planing device is releasably connectable.

According to a fourth aspect of the invention, there is provided a hydraulic machine having a hydraulic load-bearing arm and a stump planing device in accordance with the first aspect of the invention, the load-bearing arm including a hitch, the stump planing device being releasably suspendable from the load-bearing arm via the hitch.

Preferably, the hydraulic machine further comprises an earth drill device which is interposed between the hitch and the stump planing device, one end of the earth drill device being releasably engagable with the hitch and the other end of the earth drill device being releasably engagable with the stump planing device.

There is provided a method of preventing or limiting wood-swarf clogging whilst maintaining centred stump planing, not in accordance with the present invention, the method comprising utilising a stump planing device in accordance with the first aspect of the invention having an arcuate centring guide at its periphery, the arcuate centring guide being discontinuous around the circumferential extent to provide for the radial egress of wood swarf.

According to a fifth aspect of the invention, there is provided a method of storing a stump planing device in accordance with the first aspect of the invention having a peripheral discontinuous arcuate centring guide, the method comprising the steps of providing a section of the discontinuous arcuate centring guide on each cutting arm of the stump planing device so as to be coplanar or substantially coplanar therewith, each cutting arm being disengagable from a central support shaft of the stump planing device, whereby each cutting arm including its section of arcuate centring guide can lie in an axial plane of the support shaft for storage.

There is provided a stump planning device comprising a rotatable support shaft, not in accordance with the current invention, at least two cutting arms extending at or substantially at right angles to the support shaft, and a centering-tip element at one end of the support shaft, each said cutting arm including a cutter on a cutting-arm body of the cutting arm and an arcuate centering-guide arm at or adjacent to a distal end of the cutting-arm body, the arcuate centering-guide arm terminating adjacent to the other of the said cutting arms, so as to provide a space between a free distal end of the arcuate centering-guide arm and the other said cutting arm.

The invention will now be more particularly described, by way of example only, with reference to the accompanying drawings, in which:
Figure 1a is a perspective view of one embodiment of a stump planing device, from a shaft end and in accordance with the first aspect of the invention;
Figures 1b to Id shows an example of an earth drill attachable to a load-bearing arm of a hydraulic machine via a hitch, and a fixed-length shaft adapter along with a length-adjustable shaft adapter;
Figure 1e shows the earth drill of Figure 1b attached to a hydraulic load-bearing arm of a hydraulic machine via a double pin cradle hitch;
Figure 2 shows the stump planing device of Figure 1a, from a tip end;
Figure 3 shows the stump planing device from the tip end and with a centring-tip element removed;
Figure 4 is a perspective view of the centring-tip element, when removed from a shaft of the stump planing device;
Figure 5 shows a tip carrier of the centring-tip element with a tip removed;
Figure 6 shows the tip of the centring-tip element in isolation of the tip carrier; and
Figure 7 shows a plan view of one example of a planing template for use with the stump planing device.

Referring to the drawings, there is shown a stump planing device 10 for connection to an earth drill 12, for example, which in turn is connectable to a load-bearing arm 14a of a hydraulic machine 14b. The stump planing device 10 comprises an elongate support shaft 16 which is mountable for rotation either directly to the aforementioned earth drill 12 or indirectly via an elongate shaft adapter 18a, 18b, which may have a fixed length or be length adjustable, such as by being telescopic. In this latter case, the shaft adapter 18a, 18b enables releasable connection of the support shaft 16 to one end 19a thereof, whilst the other end 19b is releasably engagable with an output 20 of the earth drill 12.

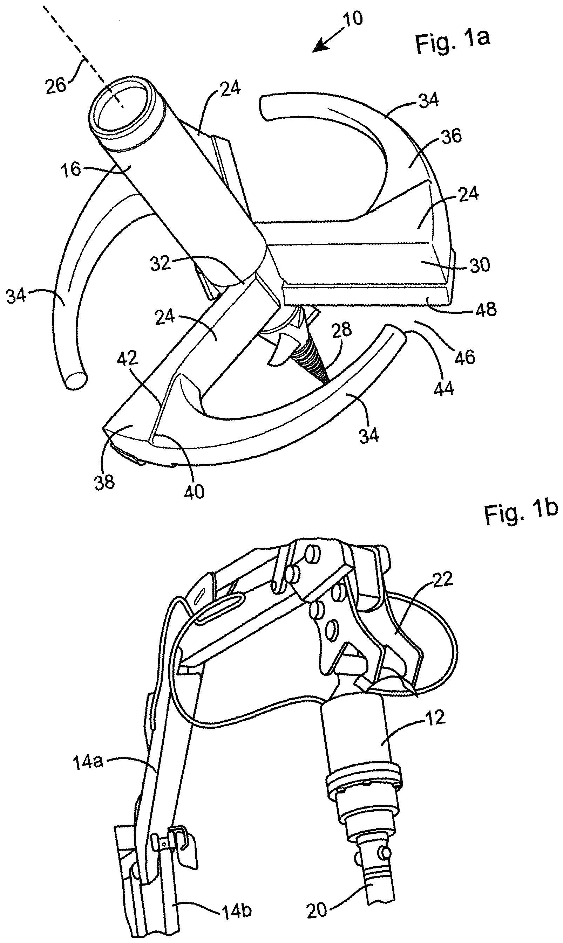

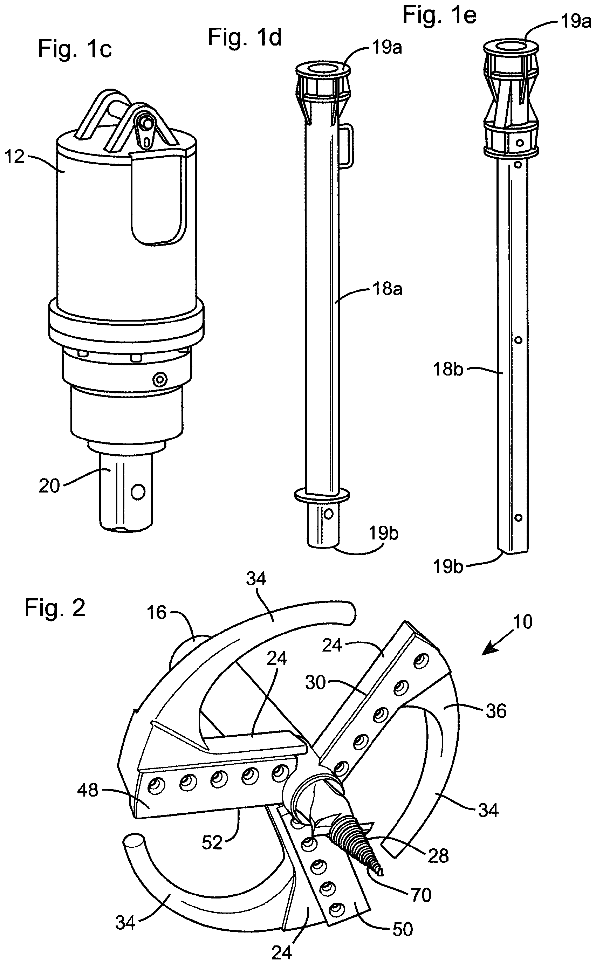

As shown in Figure 1b, the earth drill 12 is preferably vertically suspendable from a double pin cradle hitch 22 of the load-bearing arm of the hydraulic machine. A standard single pin or double pin hitch may also be utilised, as required.

The drivable output 20 of the earth drill 12 is thus lowermost once in its suspended condition, allowing the support shaft 16 or shaft adapter 18a, 18b to be releasably engaged therewith, for example, via a removable locking pin.

The stump planing device 10 further includes three equi-angularly spaced-apart cutting arms 24 which are disengagably mountable to the support shaft 16 about the rotational axis 26. Although three cutting arms 24 are preferred, two cutting arms could be utilised, or more than three cutting arms could be provided. The number of cutting arms 24 may be based on a diameter of the stump planing device 10 and thus a size of an intended stump which would be planed with the device 10. In all cases, it is preferred that the cutting arms 24 are equally spaced apart.

The stump planing device 10 also comprises a centring-tip element 28 at one end of the support shaft 16 which is axially spaced from the cutting arms 24.

Referring firstly to the cutting arms 24, a cutting-arm body 30 thereof is elongate and preferably formed of cast metal. A proximal end 32 of the cutting-arm body 30 is releasably engagable with the support shaft 16, and a rigid arcuate centring-guide arm 34 extends in a circumferential direction from a distal end of the cutting-arm body 30. The plurality of centring-guide arms 34 thus provides a discontinuous peripheral centring guide 36 around the device 10.

The cutting-arm body 30 is preferably substantially oblong with a flared or ramped distal-end portion 38, thereby promoting support for the arcuate centring-guide arm 34.

The centring-guide arm 34 is rigid, again preferably being cast metal, and is supported in cantilevered manner at the distal end 40 of the cutting-arm body 30. The arcuate centring-guide arm 34 is tapered at least in part along it arcuate longitudinal extent. In this case, the centring-guide arm 34 tapers from its proximal end 42 which abuts the ramped portion 44 of the cutting-arm body 30 to partway along the length of the centring-guide arm 34, in this being between the midway point and the distal end 44 of the centring-guide arm 34.

The longitudinal extents of the cutting-arm body 30 and the arcuate centring-guide arm 34 are coplanar or substantially coplanar, and each centring-guide arm 34 terminates adjacent to a neighbouring cutting arm 24. A space or gap 46 for the egress of wood swarf is therefore provided between the arcuate centring-guide arm 34 and the neighbouring cutting arm 24.

A cutter 48 is mounted on each cutting-arm body 30. The cutter 48 is preferably a cutting plate 50 which is disengagably mountable to a lower surface of the cutting-arm body 30. The cutting plate 50 is planar and elongate, having a longitudinal extent which matches or substantially matches a longitudinal extent of the cutting-arm body 30. The cutting plate 50 includes a leading longitudinal cutting edge 52 which protrudes from a leading longitudinal face of the cutting-arm body 30 and opposite to a direction of extension of the arcuate centring-guide arm 34. The distal end 44 of the arcuate centring-guide arm 34 extending from the cutting arm 24 terminates adjacent to the cutting edge 52 of the cutting plate 50 carried by the neighbouring cutting arm 24. Preferably, the cutting plate 50 is formed of high-grade wood chipping steel, which can be replaced as required without requiring replacement of the cutting-arm body 30, arcuate centring-guide arm 34 and support shaft 16.

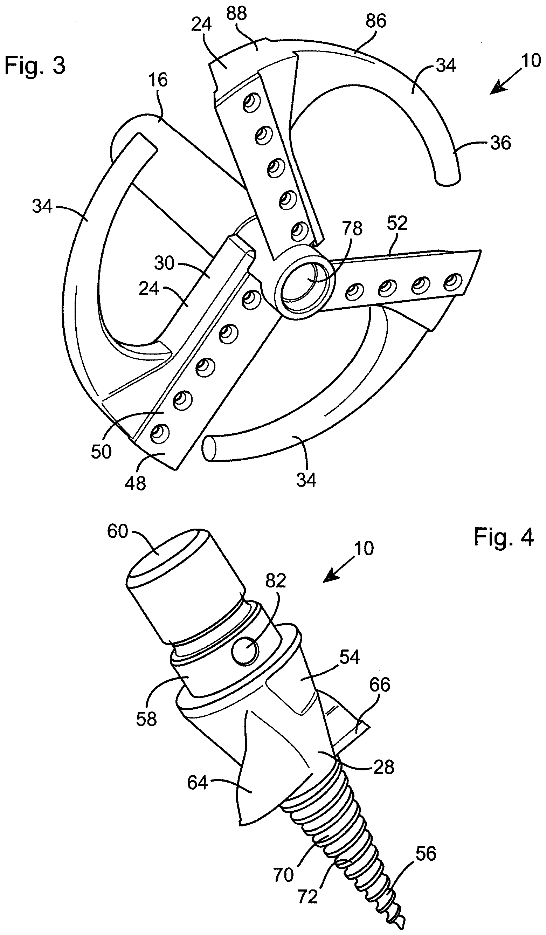

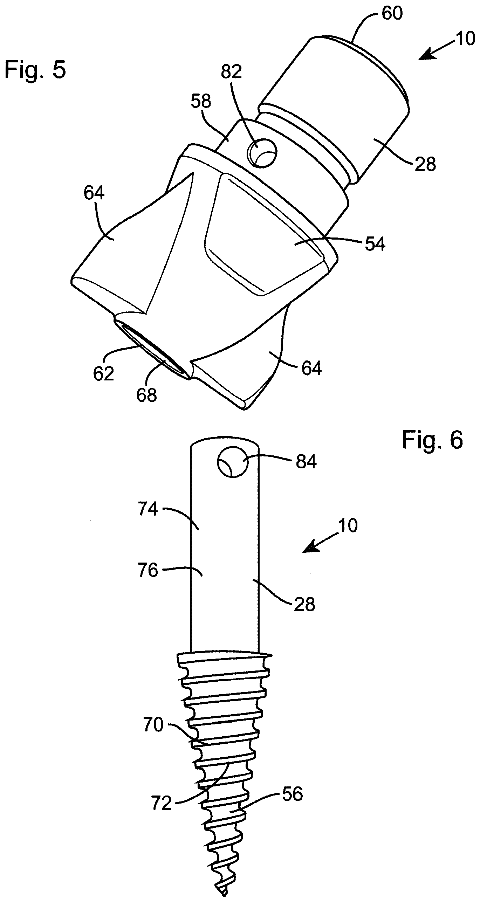

The centring-tip element 28 is best shown in Figures 4 to 6, and comprises a tip carrier 54 and a centring tip 56 which is removably engagable with the tip carrier 54. The tip carrier 54 has a carrier body 58 having a shaft-engagable end 60 which is receivable in one end of the support shaft 16, and a tip-receiving end 62 for receiving the centring tip 56. The carrier body 58 includes two outwardly extending cutting members 64, which in this case extend from the tip-receiving end 62. The cutting members 64 are preferably integrally formed as one-piece with the carrier body 58.

Each cutting member 64 includes a cutting edge 66 which is preferably diametrically offset from the other cutting edge 66. Each cutting edge 66 is also coplanar or substantially coplanar with the other cutting edge 66, and preferably also coplanar or substantially coplanar with a tip-receiving opening 68 in the tip-receiving end 62.

In this embodiment, the centring tip 56 comprises a conical cutting portion 70 having a spiral cutting edge 72 thereon, extending from a tip of the conical cutting portion 70 to a tip shaft 74. The tip shaft 74 forms an engagement member 76 which is receivable through the tip-receiving opening 68 of the carrier body 58.

To assemble the stump planing device 10, the cutting arms 24 with the cutters 48 thereon are connected to the rotatable support shaft 16 so that they are angularly fixed relative thereto, and the tip shaft 74 is fed into the tip-receiving end 62 of the carrier body 58, with the shaft-engagable end 60 then being fed into the open distal end 78 of the support shaft 16. A single first locking pin can then be used which extends through an outer pin aperture of the support shaft 16 and aligned first and second inner pin apertures 82, 84 of the carrier body 58 and tip shaft 74, respectively.

With the stump planing device 10 assembled, the support shaft 16 can then be attached, for example, via a second locking pin either directly to the aforementioned earth drill 12, shaft adapter 18a, 18b, or directly to another machine which can impart rotation to the support shaft 16.

During use, and due to the space or gap 46 between the free distal end 44 of the arcuate centring-guide arm 34 and the neighbouring cutting arm 24, wood swarf from a stump, such as a tree stump, being planed can exit and clogging is prevented or limited. Peripheral outer surfaces 86, 88 of the arcuate centring-guide arm 34 and the cutting-arm body 30 preferably lie on the same arc or substantially same arc, so that the arcuate centring-guide arms 34 centre and guide the stump planing device during use, preventing or limiting wandering during cutting.

When the stump planing device 10 is not in use, the device 10 can be dismantled, whereby the cutting arms 24 can lie independently of each other in the rotational axis plane of the support shaft 16. This enables flat-packing of the device 10, allowing for highly compact storage and/or transportation, as necessity dictates.

Although the arcuate centring-guide arm 34 is preferably integrally formed as one-piece with the cutting-arm body 30, it may be detachable as required.

With a larger stump to remove, it is often that a cutting diameter of the stump planing device 10 may be too small, thereby requiring multiple overlapping planing operations at different locations on the stump. However, it is often problematic determining what planing overlap is acceptable, and which will not result in the device 10 wandering into an existing planed hole.

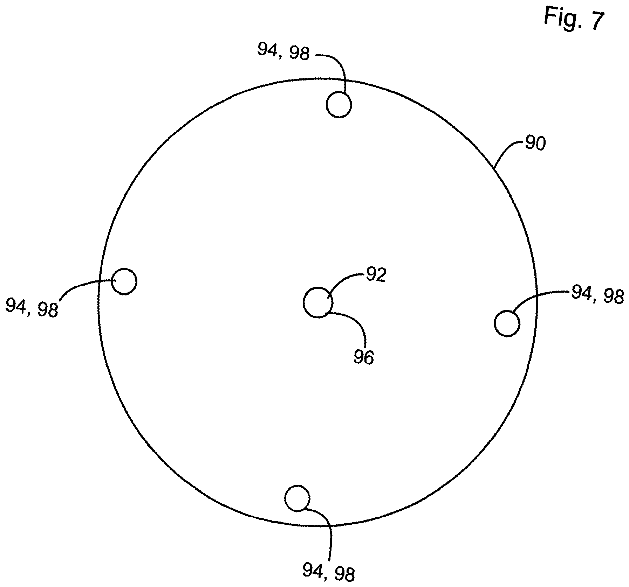

To this end, the previously described stump planing device 10 is preferably incorporated as part of a system which includes a planing template 90, as shown in Figure 7, having a location guide 92 for the centring-tip element 28. The planing template 90 is preferably a disk which is, for example, laser-cut from metal. This thereby provides a rigid and reusable template.

The planing template 90 may also beneficially include an overlap guide 94 for determining a suitable overlap of neighbouring planing areas. Consequently, the planing template 90 may include a central aperture 96 forming the location guide 92 for locating the centring-tip element 28 for a first cut by the stump planing device 10, and, based on a cutting diameter of the stump planing device 10 being used, may also include one or more secondary apertures 98 forming the overlap guide 94 at or towards a periphery thereof which enable location of the centring-tip element 28 for a second cut by the stump planing device 10 and which follows completion of the first cut.

The or each secondary aperture 98 of the overlap guide 94 thus enables positioning of the stump planing device 10 such that, following the first cut, the second cut can be undertaken which overlaps the first cut but which is least likely to wander into the first cut.

In the above-described embodiment, the arcuate centring-guide arm supported by an associated cutting-arm body extends behind the said cutting-arm body, that is, in the arcuate direction opposite to the direction of rotation and in an opposite direction to that of a cutting edge of the associated cutter. However, it is feasible that the arcuate centring-guide arm extends in both arcuate directions from a distal end of the cutting-arm body. In other words, from a cutting-edge side of the cutting-arm body and from a non-cutting-edge side of the cutting-arm body. As such, the arcuate centring-guide arm is joined to the cutting-arm body at the distal end of the cutting-arm body and between the ends of the arcuate centring-guide arm, either at the centre of the arcuate centring-guide arm or offset from the centre. In the latter case, a larger extent of the centring-guide arm may be disposed behind the cutting-arm body, opposing the direction of rotation, than in front of the cutting-arm body, towards the direction of rotation, or *vice-versa.*

Where the centring-guide arm extends from the cutting-arm body 24 in both angular directions, the centring-guide arm will have a leading distal end and a trailing distal end. Each centring-guide arm in this case terminates with its leading distal end adjacent to and spaced from the trailing distal end of its neighbouring centring-guide arm. The space or gap for the egress of wood swarf and other material to be cut is therefore between the leading distal end of one centring-guide arm and the trailing distal end of a neighbouring centring-guide arm. For clarity, with the first described embodiment, the space or gap for the egress of wood swarf and other material to be cut is between the trailing distal end of the centring guide arm and the leading face of the neighbouring cutting-arm body.

Where the centring-guide arm extends in a forward as well as rearward direction from the end of the cutting-arm body, a portion of the centring-guide arm may effectively be disposed above the cutting edge of the cutter where it meets or engages with its associated cutting-arm body.

With all of the above-described arrangements, the arcuate centring-guide arms may taper from the distal end of the cutting-arm body to the distal end or ends of the arcuate centring-guide arms, or may have a uniform or substantially uniform lateral cross-section along at least a majority of its longitudinal extent. In any event, even if an inner radius is non-uniform, the outer radius of each arcuate centring-guide arm is uniform along its longitudinal extent, so that a uniform diameter is described during rotation. Furthermore, this means that only the cutters mounted on the cutting-arm bodies cut or remove material, whereas the arcuate centring-guide arms guide and centre the planning device as a bore is formed.

Although the cutting plate having the cutting edge is demountably attachable to the cutting-arm body of the cutting arm, the cutter may be integrally formed as one-piece with the cutting-arm body. In this case, for example, the lowermost leading longitudinal edge of the cutting-arm body would be formed to include the cutting edge.

It is thus possible to provide a stump planing device which is not only less likely to suffer from clogging of wood swarf during a cutting procedure, but which can also be compactly stored and transported when not in use. With the addition of a planing template, a stump planing system can be provided allowing for accurate and repeated positioning of the stump planing device for overlapping cuts without or substantially without wandering.

The embodiments described above are provided by way of examples only, and modifications will be apparent to persons skilled in the field without departing from the scope of the invention as defined in the claims.

## Claims

1. A stump planing device (10) comprising a rotatable support shaft (16), and at least two cutting arms (24) extending from the support shaft (16), each said cutting arm (24) including a cutter (48) on a cutting-arm body (30) of the cutting arm (24) and an arcuate centring-guide arm (34) at or adjacent to a distal end (40) of the cutting-arm body (30), wherein each said cutting arm (24) is detachably fastenable to the support shaft (16) for storage and transportation, **characterised in that** each arcuate centring-guide arm (34) defines a constant outer radius along its longitudinal extent and is spaced from a neighbouring arcuate centring-guide arm (34), so as to provide a gap for the passage of cut material.

2. A stump planing device (10) as claimed in claim 1, wherein the arcuate centring-guide arm (34) extends in both arcuate directions from the cutting arm body (30).

3. A stump planing device (10) as claimed in claim 1, wherein the arcuate centring-guide arm (24) terminates opposing a cutter (48) of the other said cutting arm (24).

4. A stump planing device (10) as claimed in any one of the preceding claims, further comprising a centring-tip element (28) at one end of the support shaft (16), wherein the centring-tip element (28) includes a tip carrier (54) which is releasably connectable to an end of the support shaft (16), and a centring tip (56) which is disengagably fastenable to the tip carrier (54).

5. A stump planing device (10) as claimed in claim 4, wherein the tip carrier (54) includes at least two outwardly extending cutting members (64).

6. A stump planing device (10) as claimed in claim 5, wherein a cutting edge (66) of each cutting member (64) extends in or substantially in a plane of a tip-receiving opening (68) for receiving the centring tip (56).

7. A stump planing device (10) as claimed in any one of claims 4 to 6, wherein the centring tip (56) includes a conical cutting portion (70) having a spiral cutting edge (72) thereon.

8. A stump planing system comprising a stump planing device (10) as claimed in any one of the preceding claims, and a planing template (90) which includes a location guide (92) for the centring-tip element (28).

9. A stump planing system as claimed in claim 8, wherein the planing template (90) includes an overlap guide (94) for determining a maximum overlap of neighbouring planing areas.

10. An earth drill device (12) in combination with a stump planing device (10) as claimed in any one of claims 1 to 7, the earth drill device (12) being suspendable from a hydraulically operable arm (14a) to provide a vertical or substantially vertical drivable shaft (20) to which the rotatable support shaft (16) of the stump planing device (10) is releasably connectable.

11. A hydraulic machine (14b) having a hydraulic load-bearing arm (14a) and a stump planing device (10) as claimed in any one of claims 1 to 7, the load-bearing arm (14a) including a hitch (22), the stump planing device (10) being releasably suspendable from the load-bearing arm (14a) via the hitch (22).

12. A hydraulic machine (14b) as claimed in claim 11, further comprising an earth drill device (12) which is interposed between the hitch (22) and the stump planing device (10), one end of the earth drill device (12) being releasably engagable with the hitch (22) and the other end of the earth drill device (12) being releasably engagable with the stump planing device (10).

13. A method of storing a stump planing device (10) as claimed in any one of claims 1 to 7 having a peripheral discontinuous arcuate centring guide, the method comprising the steps of providing a section of the discontinuous arcuate centring guide on each cutting arm of the stump planing device (10) so as to be coplanar or substantially coplanar therewith, each cutting arm (24) being disengagable from a central support shaft (16) of the stump planing device (10), whereby each cutting arm (24) including its section of arcuate centring guide can lie in an axial plane of the support shaft (16) for storage.

## Patentansprüche

1. Stumpfhobelvorrichtung (10) mit einer drehbaren Stützwelle (16) und mindestens zwei Schneidarmen (24), die sich von der Stützwelle (16) aus erstrecken, wobei jeder der Schneidarme (24) einen Fräser (48) an einem Schneidearmkörper (30) des Schneidarms (24) und einen bogenförmigen Zentrierführungsarm (34) an oder angrenzend an ein distales Ende (40) des Schneidearmkörpers (30) aufweist, wobei jeder der Schneidarme (24) lösbar an der Stützwelle (16) zum Lagern und Transportieren befestigbar ist, **dadurch gekennzeichnet, dass** jeder bogenförmige Zentrierführungsarm (34) einen konstanten Außenradius entlang seiner Längserstreckung definiert und von einem benachbarten bogenförmigen Zentrierführungsarm (34) beabstandet ist, um so einen Spalt für den Durchgang von geschnittenem Material bereitzustellen.

2. Stumpfhobelvorrichtung (10) nach Anspruch 1, wobei sich der bogenförmige Zentrierführungsarm (34) in beiden bogenförmigen Richtungen vom Schneidearmkörper (30) erstreckt.

3. Stumpfhobelvorrichtung (10) nach Anspruch 1, wobei der bogenförmige Zentrierführungsarm (24) gegenüber einem Fräser (48) des anderen Schneidearms (24) endet.

4. Stumpfhobelvorrichtung (10) nach einem der vorhergehenden Ansprüche, die ferner ein Zentrierspitzenelement (28) an einem Ende der Stützwelle (16) zusammensetzt, wobei das Zentrierspitzenelement (28) einen Spitzenträger (54), der mit einem Ende der Stützwelle (16) lösbar verbindbar ist, und eine Zentrierspitze (56) beinhaltet, die lösbar an dem Spitzenträger (54) befestigbar ist.

5. Stumpfhobelvorrichtung (10) nach Anspruch 4, wobei der Spitzenträger (54) mindestens zwei sich nach außen erstreckende Schneidelemente (64) beinhaltet.

6. Stumpfhobelvorrichtung (10) nach Anspruch 5, wobei sich eine Schneide (66) jedes Schneidelements (64) in oder im Wesentlichen in einer Ebene einer Spitzenaufnahmeöffnung (68) zum Aufnehmen der Zentrierspitze (56) erstreckt.

7. Stumpfhobelvorrichtung (10) nach einem der Ansprüche 4 bis 6, wobei die Zentrierspitze (56) einen konischen Schneideabschnitt (70) mit einer spiralförmigen Schneidekante (72) aufweist.

8. Stumpfhobelsystem, umfassend eine Stumpfhobelvorrichtung (10), wie sie in einem der vorhergehenden Ansprüche beansprucht wird, und eine Hobelschablone (90), die eine Positionsführung (92) für das Zentrierspitzenelement (28) beinhaltet.

9. Stumpfhobelsystem nach Anspruch 8, wobei die Hobelschablone (90) eine Überlappungsführung (94) zum Bestimmen einer maximalen Überlappung von benachbarten Hobelbereichen beinhaltet.

10. Erdbohrvorrichtung (12) in Kombination mit einer Stumpfhobelvorrichtung (10) nach einem der Ansprüche 1 bis 7, wobei die Erdbohrvorrichtung (12) an einem hydraulisch betätigbaren Arm (14a) zum Bereitstellen einer vertikalen oder im Wesentlichen vertikalen antreibbaren Welle (20), mit der die drehbare Stützwelle (16) der Stumpfhobelvorrichtung (10) lösbar verbindbar ist, aufhängbar ist.

11. Hydraulische Maschine (14b) mit einem hydraulisch Last-tragenden Arm (14a) und einer Stumpfhobelvorrichtung (10) nach einem der Ansprüche 1 bis 7, wobei der tragende Arm (14a) einen Haken (22) aufweist, wobei die Stumpfhobelvorrichtung (10) über den Haken (22) lösbar am tragenden Arm (14a) aufhängbar ist.

12. Hydraulische Maschine (14b) nach Anspruch 11, ferner umfassend eine Erdbohrvorrichtung (12), die zwischen dem Haken (22) und der Stumpfhobelvorrichtung (10) angeordnet ist, wobei ein Ende der Erdbohrvorrichtung (12) lösbar mit dem Haken (22) und das andere Ende der Erdbohrvorrichtung (12) lösbar mit der Stumpfhobelvorrichtung (10) in Eingriff bringbar ist.

13. Verfahren zum Lagern einer Stumpfhobelvorrichtung (10) nach einem der Ansprüche 1 bis 7 mit einer peripheren diskontinuierlichen bogenförmigen Zentrierführung, wobei das Verfahren die Schritte umfasst, einen Abschnitt der diskontinuierlichen bogenförmigen Zentrierführung an jedem Schneidearm der Stumpfhobelvorrichtung (10) so bereitzustellen, dass sie koplanar oder im Wesentlichen koplanar ist, wobei jeder Schneidearm (24) von einer zentralen Stützwelle (16) der Stumpfhobelvorrichtung (10) lösbar ist, wobei jeder Schneidearm (24) einschließlich seines Abschnitts der bogenförmigen Zentrierführung zur Lagerung in einer axialen Ebene der Stützwelle (16) liegen kann.

## Revendications

1. Dispositif d'arasement de souche (10) comprenant un arbre de support (16) rotatif, et au moins deux bras de coupe (24) qui s'étendent à partir de l'arbre de support (16), chacun desdits bras de coupe (24) comprenant un élément de coupe (48) sur un corps de bras de coupe (30) du bras de coupe (24) et un bras de guide de centrage arqué (34) à une extrémité distale (40) du corps de bras de coupe (30) ou au voisinage de celle-ci, chacun desdits bras de coupe (24) pouvant être fixé de manière amovible à l'arbre de support (16) pour être stocké et transporté, **caractérisé en ce que** chaque bras de guide de centrage arqué (34) définit un rayon extérieur constant le long de son étendue longitudinale et est espacé d'un bras de guide de centrage arqué (34) voisin, afin de laisser un espace pour le passage du matériau coupé.

2. Dispositif d'arasement de souche (10) selon la revendication 1, dans lequel le bras de guide de centrage arqué (34) s'étend dans les deux directions arquées à partir du corps de bras de coupe (30).

3. Dispositif d'arasement de souche (10) selon la revendication 1, dans lequel le bras de guide de centrage arqué (24) s'arrête en face d'un élément de coupe (48) dudit autre bras de coupe (24).

4. Dispositif d'arasement de souche (10) selon l'une quelconque des revendications précédentes, comprenant en outre un élément de pointe de centrage (28) à une extrémité de l'arbre de support (16), l'élément de pointe de centrage (28) comprenant un support de pointe (54) qui peut être connecté de manière libérable à une extrémité de l'arbre de support (16), et une pointe de centrage (56) qui peut être fixée de manière amovible au support de pointe (54).

5. Dispositif d'arasement de souche (10) selon la revendication 4, dans lequel le support de pointe (54) comprend au moins deux éléments de coupe (64) qui s'étendent vers l'extérieur.

6. Dispositif d'arasement de souche (10) selon la revendication 5, dans lequel un bord de coupe (66) de chaque élément de coupe (64) s'étend totalement ou presque dans un plan d'une ouverture recevant la pointe (68) destinée à recevoir la pointe de centrage (56).

7. Dispositif d'arasement de souche (10) selon l'une quelconque des revendications 4 à 6, dans lequel la pointe de centrage (56) comprend une partie de coupe conique (70) ayant un bord de coupe en spirale (72) sur celle-ci.

8. Système d'arasement de souche comprenant un dispositif d'arasement de souche (10) selon l'une quelconque des revendications précédentes, et un modèle d'arasement (90) qui comprend un guide de positionnement (92) pour l'élément de pointe de centrage (28).

9. Système d'arasement de souche selon la revendication 8, dans lequel le modèle d'arasement (90) comprend un guide de chevauchement (94) pour déterminer un chevauchement maximum de zones d'arasement voisines.

10. Dispositif de forage de terrain (12) en association avec un dispositif d'arasement de souche (10) selon l'une quelconque des revendications 1 à 7, le dispositif de forage de terrain (12) pouvant être suspendu depuis un bras à commande hydraulique (14a) pour obtenir un bras à entraînement vertical ou sensiblement vertical (20) auquel l'arbre de support (16) rotatif du dispositif d'arasement de souche (10) peut se connecter de manière libérable.

11. Machine hydraulique (14b) présentant un bras de support de charge (14a) hydraulique et un dispositif d'arasement de souche (10) selon l'une quelconque des revendications 1 à 7, le bras de support de charge (14a) comprenant une attache de levage (22), le dispositif d'arasement de souche (10) pouvant être suspendu de manière libérable depuis le bras de support de charge (14a) par l'intermédiaire de l'attache de levage (22).

12. Machine hydraulique (14b) selon la revendication 11, comprenant en outre un dispositif de forage de terrain (12) qui est intercalé entre l'attache de levage (22) et le dispositif d'arasement de souche (10), une extrémité du dispositif de forage de terrain (12) pouvant venir en prise de manière libérable avec l'attache de levage (22) et l'autre extrémité du dispositif de forage de terrain (12) pouvant venir en prise de manière libérable avec le dispositif de forage de terrain (10).

13. Procédé de stockage d'un dispositif de forage de terrain (10) selon l'une quelconque des revendications 1 à 7 ayant un guide de centrage arqué discontinu périphérique, le procédé comprenant les étapes de fourniture d'une section du guide de centrage arqué discontinu sur chaque bras de coupe du dispositif de forage de terrain (10) afin d'être sur le même plan ou sensiblement sur le même plan que celui-ci, chaque bras de coupe (24) pouvant se séparer d'un arbre de support (16) central du dispositif de forage de terrain (10), chaque bras de coupe (24), y compris sa section de guide de centrage arqué, pouvant se placer dans un plan axial de l'arbre de support (16) pour être stocké.
